**Europäisches Patentamt**

**European Patent Office**

**Office européen des brevets**

(19)

(11) Publication number: **0 145 891**
A1

## (12) EUROPEAN PATENT APPLICATION

(21) Application number: 84112665.9

(22) Date of filing: 19.10.84

(51) Int. Cl.⁴: **B 23 K 9/02**

(30) Priority: 30.11.83 IT 1268583

(43) Date of publication of application: 26.06.85
Bulletin 85/26

(84) Designated Contracting States: **AT BE CH DE FR GB LI
LU NL SE**

(71) Applicant: **ARMCO S.p.A., Via Cirenaica 3,
I-16146 Genova (IT)**

(72) Inventor: **Debarbieri, Franco, Via Catalani 1/42,
I-16154 Genova (IT)**
Inventor: **Dorizzi, Claude, Rue de l'Abrevoire 4,
F-92400 Courbevoi (FR)**
Inventor: **Montorsi, Roberto, Viale Ticino 30,
I-21018 Sesto Calende (IT)**
Inventor: **Zaramelia, Giancarlo, Corso Peschiera 361,
I-10141 Torino (IT)**

(74) Representative: **Porsia, Bruno et al, c/o Succ. Ing.
Fischetti & Weber Via Caffaro 3, I-16124 Genova (IT)**

(54) Automatic electrowelding machine.

(57) The present invention relates to an automatic electro-welding machine for large size components, with a welding head controlled by a programmable unit and associated with devices which move it along three axes located at right angles with each other; the welding head includes the sensing finger transmitting to the control unit the signals required for the automatic variations and self-learning of the execution program. The sensing finger can both disclose any deviations of the actual welding line, to be performed by the welding head, from the theoretical line stored in the control unit thus determining the correction of the latter, and guide the welding head in the automatic self-learning procedure of the execution program.

ARMCO S.p.A.,

Genova, Italy.

## Automatic electrowelding machine.

The present invention relates to the automatic electrowelding machines which are commonly called welding Robots.

At present the welding Robots consisting of a mobile welding head controlled by a programmable unit, have a limited field of action and can practically only perform gas-shielded open arc welding.

These limits are overcome by the present invention which has for its object an automatic welding machine operating with a cored wire as well as with a gas-shielded open arc and in particular with a submerged arc, the welding head of which is associated with proper devices which move it along three axes located at right angles with each other and includes the sensing finger transmitting to the control unit the signals required for the automatic variations and self-learning of the execution program.

Substantially this sensing finger can both disclose any deviations of the actual welding line, to be performed by the welding head, from the theoretical line stored in the control unit, thus determining the correction of the latter, and guide the welding head in the automatic self-learning procedure of the execution program.

These and other features of the invention and the consequent advantages are illustrated by the following detailed description of some preferred embodiments, made, by way of non-limiting example, with reference to the annexed sheets of drawings, in which:

Figure 1 shows, in perspective view and schemati= cally, an automatic electrowelding machine in accordance with the invention;

Figure 2 shows, in perspective view and in a different scale, the operating unit of the machine including the welding head or torch with the associated sensing finger;

Figure 3 is a schematic perspective view of a welding machine according to the invention and with the operating unit mounted on a supporting structure different from that shown in Figure 1;

Figure 4 shows, in perspective view, a further modification of the structure supporting the operating unit.

Figure 5 is a simplified diagram showing the functions of the sensing finger associated with the welding torch;

Figures 6 and 7 are respectively side and front schematic views of a welding machine in accordance with the invention, suitable for the submerged arc welding, and pointing out the equipment supplying the wire electrode to the torch;

Figure 8 shows the side view of the welding machine according to Figures 6 and 7 evidencing the equipment used in feeding the flux to the torch.

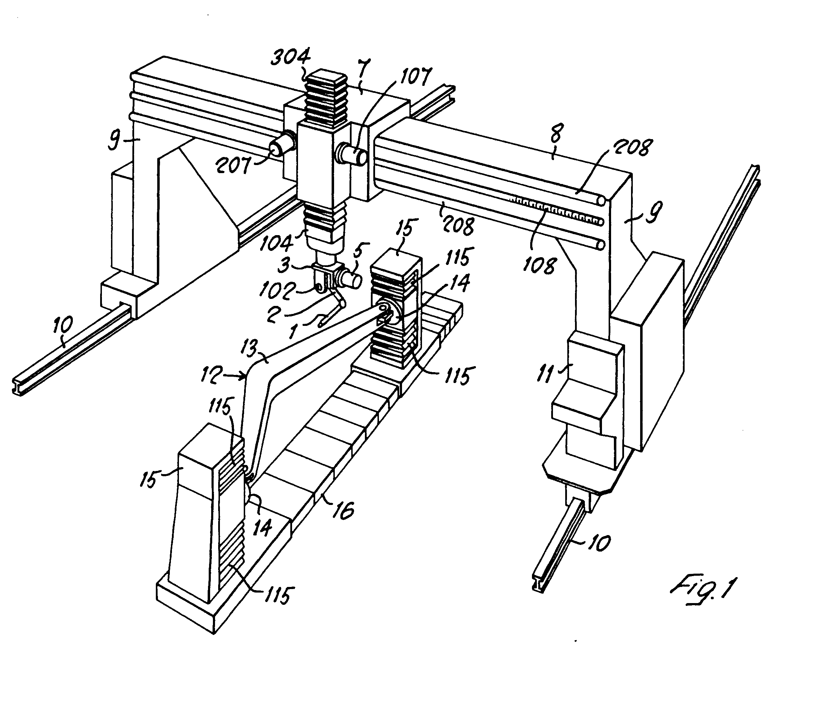

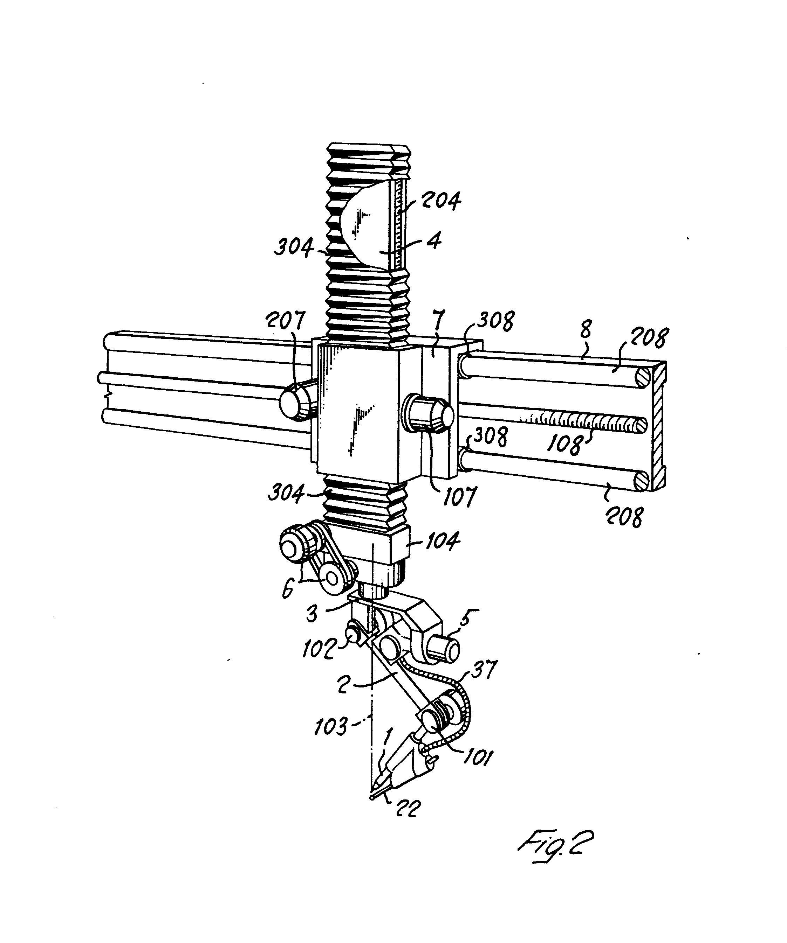

Figures 1 and 2 show an automatic electro-welding machine according to the invention, controlled by a programmable unit with its welding head or torch indicated with 1. The head has its fulcrum in 101 at the lower end of an arm 2 the other end of which has its fulcrum in 102 in a support 3, rotating on the vertical axis 103, applied to a box-type foot 104 of a column 4. The actuator 5 is fixed to support 3 and operates torch 1 and arm 2 which are swung in a compass-like way so that the end of the electrode is always along the rotating axis 103 of the torch-holder unit 2,3,5, the rotary driving means of which are indicated with 6 and are mounted on foot 104 of column 4. Column 4 is carried by carriage 7 and moves vertically with respect to it: this movement is ensured by cylindrical guide-ways made of hardened ground steel cooperating with ball bushings (not included in the drawing); this movement is ensured by a ball screw unit 204 through motor 107. A plaited sheath 304 covers the parts of column 4 protruding from carriage 7, thus protecting the column without preventing its movement.

The carriage 7 is traversing along an horizontal beam 8 by means of a motor 207; in this case too, the movement is ensured by a ball screw unit 108, while the carriage 7 slides along cylindrical guideways 208 made of hardened ground steel cooperating with ball bushings 308.

Beam 8, together with two uprights 9, forms a trailer-mounted portal structure sliding along the parallel tracks 10, at right angles with beam 8. One of the uprights 9 carries the control console 11.

From the aforesaid, it is evident that the welding torch 1 can reach any point in the space defined around it, since it can move according to three axes at right angles with one another.

According to the invention the welding machine is also provided with a device 12 which positions the workpiece to be welded, as shown in Figure 1. This positioning device 12 is located between the two tracks 10 to which it is basically parallel, and includes an angled support 13, to carry the workpiece; this support is hinged at the two ends to two opposite rotating heads 14, movably mounted along two vertical guideways, the supporting posts 15 of which are installed on a board 16 as illustrated.

Also the vertical guideways are protected by external plaited sheaths 115.

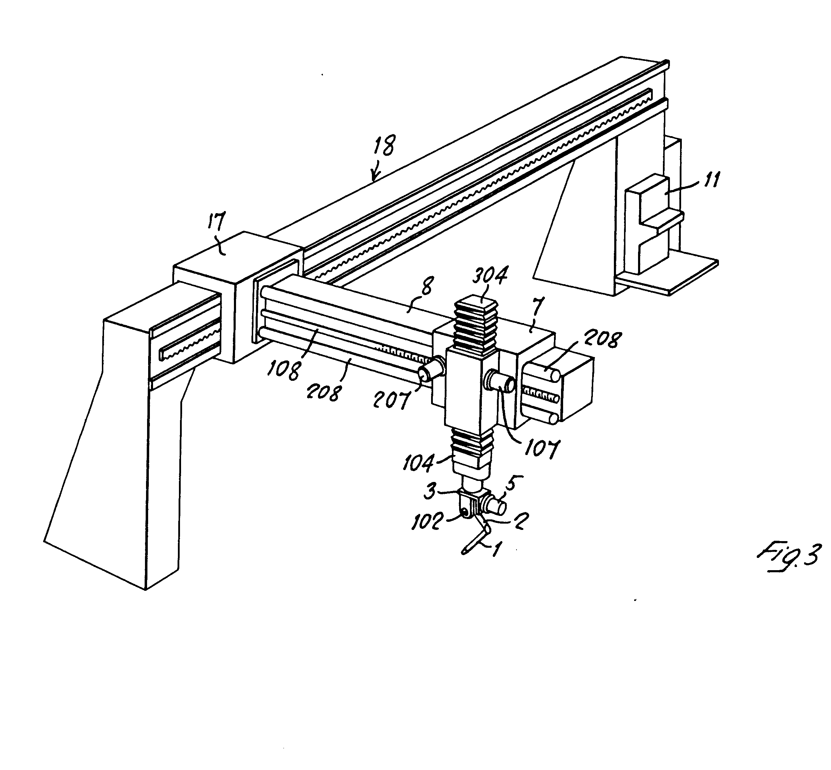

According to a modified embodiment of the welding machine, shown in Figure 3, beam 8 is cantilevered to a carriage 17 traversing along a fixed portal structure 18, extending at right angle with beam 8.

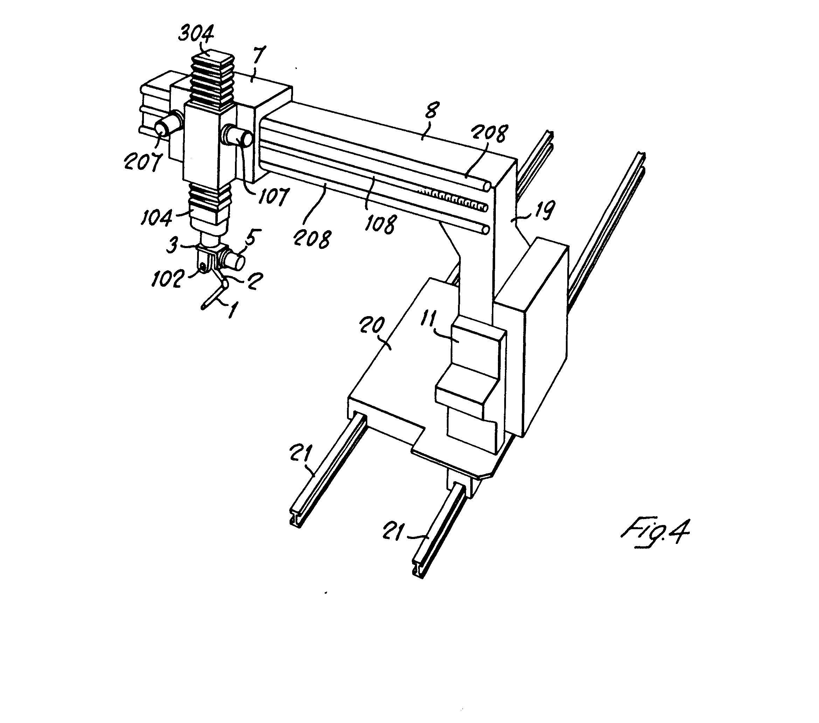

According to a further modified embodiment of the welding machine shown in Figure 4, the beam 8 is cantilevered to a tower-structure 19 installed on a trailer-mounted platform 20 sliding on the track 21 at right angles with the beam 8.

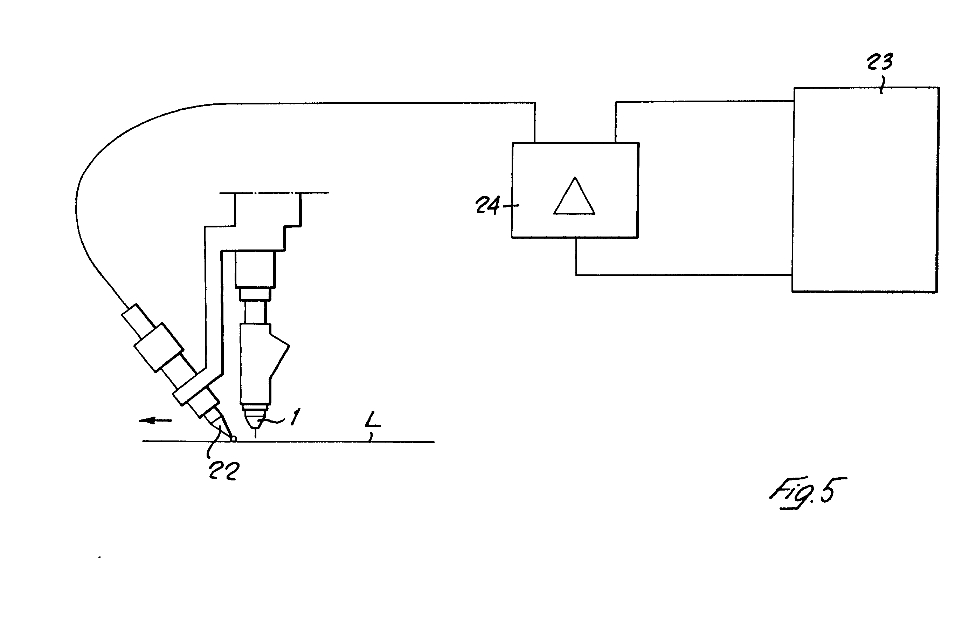

The welding torch 1 (see Figures 2 and 5) includes a slightly spaced sensing finger 22 which always precedes the torch when moving along the welding line of the work= piece thanks to the rotation of the whole torch-holder unit 2,3,5. In this position, the sensing finger 22 can send to the control unit 23 (Figure 5) the signals related to the subsequent preset points of the welding line L; these signals are then processed by the control unit; all this occurs before the torch, gradually reaches the preset points.

A first function of the sensing finger 22 is the programming of the control unit consisting in memory storage of the co-ordinates of the points required to define the welding line the torch has to cover.

Programming can be accomplished through the following three procedures, used both separately and combined:

a)   Storage of data by means of the console keyboard or drawn from an associated processor (CAM).

b)   Semi-automatic self-learning according to which the welding torch is positioned on the significant points of the welding line, whose coordinates are stored together with the welding parameters.

c)   Automatic self-learning.

The first two procedures belong to the traditional engineering, while the third is an essential characteristic of the invention, and is performed by the sensing finger 22. According to this procedure, the operator simply positions the sensing finger and the torch on the initial point of the welding line. The movement of the unit along the welding line is therefore completely automated, since the sensing finger sends the necessary signals to the control unit within the required time. During the movement of the welding unit all data related to the welding line covered are stored.

The sensing finger 22 is also used with a second function relating to the stored program run both off-load and in welding. During this execution mode the signals coming from the sensing finger are sent to a comparing unit 24 (Figure 5) depending from the control unit 23, thus checking any deviations of the actual welding line from the stored theoretical line; these deviations are due to the processing tolerances of the parts to be welded, to their faulty assembling as well as to the thermal expansions which occur during welding. These deviations are immediately self-balanced by the control unit.

As stated above, the welding machine is parti= cularly advantageous for the submerged arc welding, where a wire electrode is used, while the arc strikes within a powdery protective substance denominated "flux".

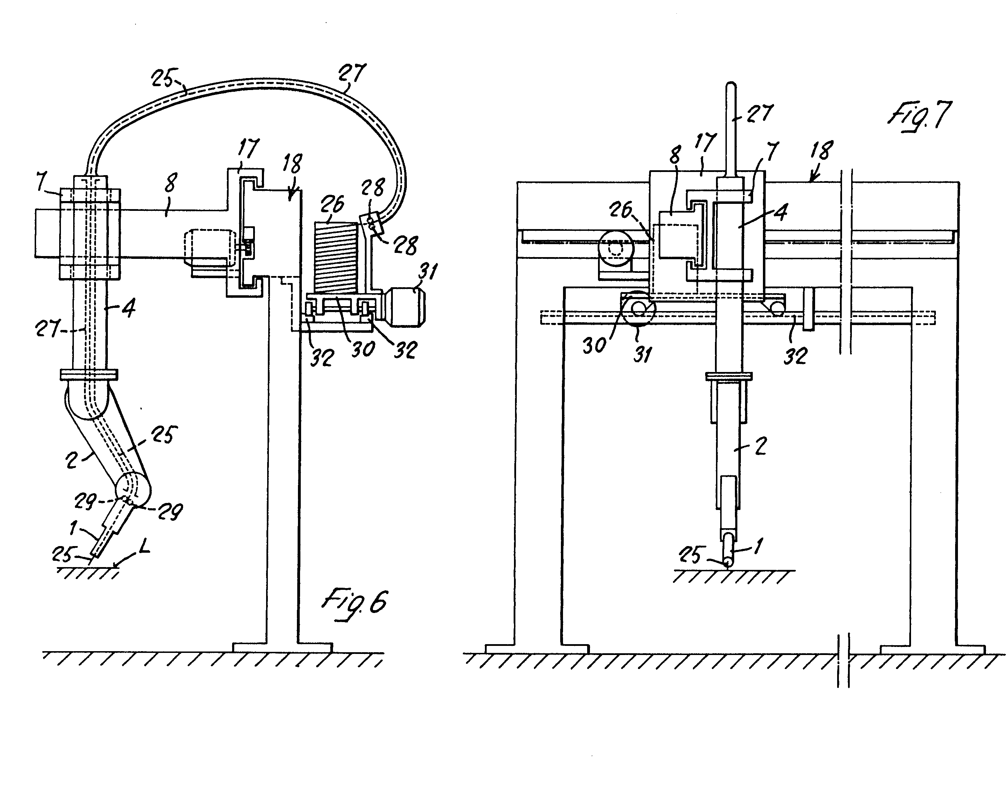

Figures 6 to 8 show the equipment required to perform this type of welding applied to the above described structures.

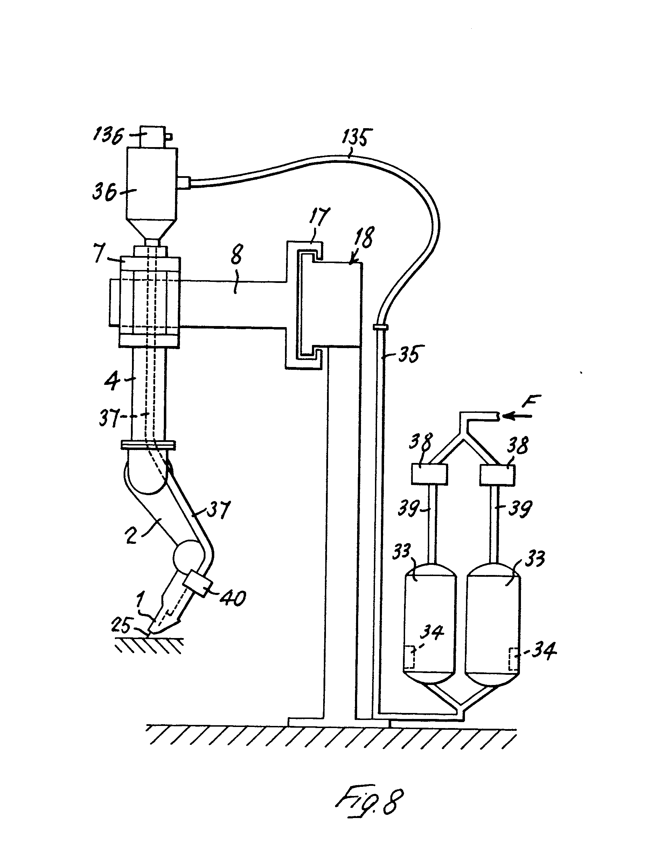

Figures 6 and 7 indicate the wire electrode 25 which is unwound from a coil 26 and fed to torch 1; during its run it is guided by a sheathing 27 which is to a large extent flexible. The push-pull devices of the wire electrode are shown schematically by the couple of motorized pins respectively 28 and 29.

The wire coil 26 can follow the movements of the torch along beam 18 as it is mounted on a sliding carriage 30, moved by motor 31 on the tracks 32 longitudinally carried by beam 18. With reference to Figure 8, the flux is stored in two tanks 33 and its level inside the tanks is checked by the respective detectors 34. Under the thrust of the compressed air coming from a source F and let into tanks 33, the flux is fed through a pipeline 35 provided with a flexible section 135 to a container 36 located at the top of column 4 and fitted with a pressure relief valve 136. The flux is then conveyed to the end of torch 1 by means of the partly flexible duct 37.

Two solenoid interlock valves 38 are fitted on the tubes 39 supplying the compressed air thus actuating one or the other of the two tanks 33. A solenoid interlock valve 40 checks the flux at the tip of torch 1.

According to the invention the aforesaid equipment of submerged arc welding ensures the following:

- a continuous feed of the welding flux;

- a continuous feed of the welding wire, generally with a diameter up to 5 mm;

- an optimum adjustment of the welding flux.

The welding machine can naturally be equipped for cored wire weldings or open arc welding with gas protection (MIG/MAG). From the aforesaid it is evident that the welding according to the invention offers the following advantages as compared to similar traditional welding machines:

A) The whole program, or part of it, is automatically self-learned.

B) The differences disclosed between the actual welding line and the theoretical line stored in the control unit are automatically compensated.

C) The continuous welding of large workpieces.

D) Wide flexibility in the utilization.

The welding machine according to the invention is not limited to the above mentioned preferred embodiments but may be subject to any modifications and variations, especially from the construction view point, falling within the limits and scope of the invention, as mentioned above and stated in the following claims.

CLAIMS

1. Automatic electrowelding machine for large size workpieces, provided with a mobile welding head (1) controlled by a programmable control unit (23) and characterized in that the said welding head (1) associated with devices which move it along three axes located at right angles with each other, and comprises a sensing finger (22) transmitting to the control unit (23) the signals required for the automatic variation and self-learning of the execution program.

2. Automatic electrowelding machine according to claim 1, characterized in that the sensing finger (22) is positioned ahead of the welding head (1) and is movable together with it, thus guiding the welding head (1) in the automatic self-learning procedure of the execution program, and disclosing and transmitting to the control unit (23) the co-ordinates of the subsequent points of the actual welding line (L) or path the welding head (1) has to follow, before the latter gradually reaches these points, thus comparing the actual line with the theore= tical line stored in the control unit (23), so that the actual line can be corrected within the time limit should it deviate from the theoretical line.

3. Automatic electrowelding machine according to claims 1 and 2, characterized in that the sensing finger (22) is positioned, at a suitable distance, ahead of the welding head (1) with reference to the direction in which the latter is moving.

4. Automatic electrowelding machine according to claims 1 to 3, characterized in that the welding unit, including the welding head (1) and the sensing finger (22), rotates around a vertical axis (103) passing through the end of the welding electrode.

5. Automatic electrowelding machine according to claims from 1 to 4, characterized in that the welding unit, including the welding head (1) and the sensing finger (22), is rotatably mounted at the bottom of a column (4) carried by a carriage (7) and moves vertically with respect to it, said carriage (7) being capable of traversing along an horizontal beam (8) on suitable supporting structure and moving with it or with respect to it in a right angled direction with its longitudinal axis.

6. A machine according to claim 5, characterized in that the beam (8) supported at the ends by two trailer--mounted uprights (9), sliding along guideways (10) at right angles with the beam (8).

7. A machine according to claim 5, characterized in that the beam (8) is cantilevered to a trailer-mounted tower-structure (19), sliding along the guideways (21) at right angles with it.

8. A machine according to claim 5, characterized in that the beam (8) is cantilevered to a carriage (17) traversing along a portal structure (18) extending at right angle with the beam.

9. A machine according to claims 5 to 8, characte= rized in that the welding head (1) has its fulcrum at the end of the arm, having in turn its fulcrum in a support rotating on a vertical axis below this column; actuators are connected to this unit thus swinging in a compass like way the head and arm so that the end of the electrode carried by the torch is always along the rotating axis of this support.

10. A machine according to claims 5 to 9, characterized in that it comprises means (12), which depend for their function on the control unit, for positioning the workpiece to be welded.

11. A machine according to claim 10, characterized in that the positioning means (12) include an angled support (13), in a horizontal or subhorizontal position, carrying the piece to be welded, said this support (13) being hinged at the two ends to two opposite rotary heads (14), movably mounted along two vertical fixed guideways (15).

12. A machine according to claims 1 to 11, characterized in that it comprises means functionally depending on the control unit (23), for the submerged arc welding.

13. A machine according to claim 12, characterized in that it comprises a device regularly and continuously supplying a wire electrode (25) to the welding head (1).

14. A machine according to claim 13, characterized in that the said device comprises a coil (26) with the wire electrode (25) wound round it, said wire electrode (25) being drawn from the coil and carried to the end of the welding head, by means of push-pull devices comprising a pair of motorized pins (28,29), and being guided within a sheathing (27) which is to a large extent flexible, the said coil (26) being mounted on a carriage (30) sliding on guideways longitudinally carried by the fixed portal thus following the movements of the welding head along the portal.

15. A machine according to claims 12 to 14, characterized in that it comprises an operative unit regularly and continuously feeding the flux to the welding head (1).

16. A machine according to claim 15, characterized in that the feeding device consists of two pressurized tanks (33) containing a certain quantity of flux, which is delivered from the tanks (33), firstly through a partly flexible pipeline (135), to an intermediate container (36) located at the top of the column carrying the welding unit, and fitted with a pressure relief valve, the flux being conveyed from said container (36), through a second partly flexible pipeline (37), to the welding head, detectors (34) being provided for checking the level of the flux in the said tanks (33) and valve devices checking the pressurization of the tanks and the flux at the welding head outlet.

Fig.1

Fig.2

Fig.3

Fig.4

Fig.5

Fig. 6

Fig. 7

21/23

0145891

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP - A1 - 0 017 167 (MESSER GRIES-HEIM GMBH)<br>* Totality * | 1-8,10 | B 23 K 9/02 |
| A | DE - A1 - 3 143 834 (KABUSHIKI)<br>* Claims * | 1,2 | |
| A | DE - A1 - 2 847 169 (SHIN ME1WA)<br>* Claims; fig. 1,2 * | 1-10, 13,14 | |
| A | US - A - 4 221 957 (BARGER et al.)<br>* Fig. * | 15,16 | |
| A | US - A - 4 192 986 (UDAGAWA et al.)<br>* Totality * | 1-10 | TECHNICAL FIELDS SEARCHED (Int. Cl.4) |
| A | "SCHWEISSTECHNIK", vol. 1, 37. Jahrgang, 1983, Wien<br>KLOIMÜLLER "Entwicklungsstand und praktische Erfahrungen beim Einsatz von Schweißrobotern"<br>pages 2-6<br>* Fig. 3,4 * | 1,11 | B 23 K 9/00<br>B 23 K 37/00 |

The present search report has been drawn up for all claims

| Place of search | Date of completion of the search | Examiner |
|---|---|---|
| VIENNA | 20-02-1985 | BENCZE |